# EUROPÄISCHE PATENTANMELDUNG

(11) **EP 0 611 684 A1**
(43) Veröffentlichungstag der Anmeldung: **24.08.1994**
(21) Anmeldenummer: 94200386.4
(22) Anmeldetag: 14.02.1994
(51) Int. Cl.: B60R 21/22

(54) **Luftsackvorrichtung für einen Fahrzeugsitz**

(30) Priorität: 18.02.1993 DE 4305002; 25.08.1993 DE 4328528
(71) Anmelder: PARS Passive Rückhaltesysteme GmbH, 63755 Alzenau (DE)
(72) Erfinder: Kippelt, Ulrich, D-63801 Kleinostheim (DE); Hoffmann, Rainer, D-63755 Alzenau (DE); Müschenborn, Gerd, D-63739 Aschaffenburg (DE)
(74) Vertreter: Rieger, Harald, Dr.

(57) **Zusammenfassung**

Mit einem Fahrzeugsitz ist eine Gassack-Aufprall-Schutzeinheit gegen einen Seitenaufprall des Fahrzeugs verbunden, deren aufgeblasener Gassack zwischen der Kopf-/Halspartie des Insassen und der unmittelbar benachbarten Seitenstruktur des Fahrzeugs liegt. Damit sich das Zentrum des sich aufblasenden Gassacks außerhalb des Kopfkreises des Insassen befindet, ist bei einem Fahrzeugsitz mit in der Rückenlehne integrierter Kopfstütze der Gassackbehälter an der Seitenfläche des Fahrzeugsitzes im Übergangsbereich von der Rückenlehne zur Kopfstütze angeordnet.

## Beschreibung

Die Erfindung betrifft einen Fahrzeugsitz, insbesondere für die Insassenzelle von Personenkraftwagen, bestehend aus Sitzkissen, Rückenlehne, Kopfstütze und einer Gassack-Aufprall-Schutzeinheit gegen einen dynamischen Seitenaufprall, deren im inaktiven Zustand zusammengefalteter, durch das von einem Gasgenerator erzeugte Gas sich aufblasender, in den Fahrzeuginnenraum entfaltender Gassack im aktivierten Zustand im Raum zwischen der Kopf-/Halspartie des Insassen und der unmittelbar benachbarten Seitenstruktur des Fahrzeugs liegt.

Bei einem dynamischen Seitenaufprall eines Fahrzeugs, einer Unfallart, die etwa 35 % aller Unfälle darstellt, auf ein Hindernis erfolgt eine starke rotatorische Seitwärtsbewegung des Kopfs des Insassen gegen die Stoßrichtung des Seitenaufpralls. Durch den Aufprall des Kopfs des Insassen auf die Seitenstruktur des Fahrzeugs oder auf externe Gegenstände können erhebliche Schädelverletzungen und/oder Verletzungen der Halswirbelsäule entstehen; denn der Insasse sitzt hier nur ein bis zwei Handbreit von der Stelle des Seitenaufpralls entfernt, so daß dieser von besonderer Gefährlichkeit ist.

Um die Gefahr schwerer und tödlicher Verletzungen von Insassen von Personenkraftwagen bei einem Seitenaufprall zu reduzieren, werden gemäß US-Standard-Nummer 214 (FMVSS 214) ab September 1993 bestimmte Anforderungen an die Aufpralleigenschaften von Personenkraftwagen - ausgedrückt in Beschleunigungswerten - gestellt. So darf jeder Personenkraftwagen bei einem Seitenaufprall mittels einer mit einer Geschwindigkeit von 53,9 km/h bewegten verformbaren, unter einem Winkel von 63 % auf den Personenkraftwagen auftreffenen Barriere für den Insassen die Seitenbeschleunigung des Brustkorbs von 85 g für Personenkraftwagen mit vier Seitentüren und 90 g für Personenkraftwagen mit zwei Seitentüren und die Beschleunigung des Beckens von 130 g nicht überschreiten.

Um darüber hinaus die passive Sicherheit weiter zu erhöhen, ist in der DE-A-2 249 098 im Kopfbereich des Fahrzeuginsassen eine im seitlichen Dachrahmen des Fahrzeugs angeordnete Gassack-Aufprall-Schutzeinheit vorgesehen, deren Gassack im aufgeblasenen Zustand zwischen dem Kopf des Fahrzeuginsassen und der diesem benachbarten Seitenwand des Fahrzeugs zu liegen kommt. In der DE-C-3 422 263 ist eine Sicherheitseinrichtung zum Schutz von Fahrzeuginsassen gegen einen Seitenaufprall beschrieben, bei der über die Deformation der Karosserie ein in der Seitenwand des Fahrzeugs angeordneter volumenveränderbarer Gasgenerator einen im seitlichen Dachholm des Fahrzeugs befindlichen Gassack aufbläst. Die GB-A-2 260 620 zeigt eine in der Tür eines Fahrzeugs untergebrachte Gassack-Aufprall-Schutzeinheit. Im Falle eines Seitenaufpralls soll sich der aufblasende Gassack zwischen den Fahrzeuginsassen und die Seitenwand des Fahrzeugs schieben. Gemäß der DE-A-3 741 637 ist zum Schutz gegen einen Seitenaufprall des Fahrzeugs in der Rückenlehne des Sitzes in dem die Schultern des Fahrzeuginsassen abstützenden Bereich wenigstens eine nach vorn vorspringende Seitenwange angeordnet, in der in einem Hohlraum ein aufblasbarer Gassack untergebracht ist. Abgesehen davon, daß die vorspringende Seitenwange das Ein- und Aussteigen des Fahrzeuginsassen behindert, kann diese ggf. im Kopfkreis des Insassen liegen, wodurch die Bewegung des Kopfes zur Seite behindert wird. Die DE-A-4 018 470 zeigt eine Sicherheitsvorrichtung gegen einen Seitenaufprall eines Fahrzeugs, bei der im seitlichen Teil der Rückenlehne des Fahrzeugs eine Gassack-Aufprall-Schutzeinheit angebracht ist, deren sich im Falle eines Seitenaufpralls aufblasender Gassack so zwischen den Fahrzeuginsassen und die Seitenwand des Fahrzeugs schiebt, daß der Mittelpunkt desjenigen Teils des Gassacks, mit dem der Insasse in Kontakt kommt, im wesentlichen mit dem Schwerpunkt des Rumpfs des Insassen fluchtet. Die stark rotatorische Seitwärtsbewegung des Kopfes des Fahrzeuginsassen wird beim Seitenaufprall des Fahrzeugs in keiner Weise abgefangen. Die DE-A-4 210 562 zeigt eine bei einem Seitenaufprall aktivierte, mit Gassäcken bestückte Insassenschutzvorrichtung an einer Seite eines Fahrzeugs. Dabei sind eine Mehrzahl im aktivierten Zustand länglicher, sich dann parallel zueinander im wesentlichen in einer gemeinsamen Vertikalebene erstreckender Gassäcke an nebeneinanderliegenden Enden mit individuellen, gleichzeitig zündenden Gasgeneratoren verbunden, die im wesentlichen nebeneinander im Fahrzeug- oder Sitzaufbau untergebracht sind. Diese Insassenschutzvorrichtung ist mit einem erheblichen Aufwand verbunden. Die DE-U-9 202 725 befaßt sich mit einer Insassenschutzeinrichtung für Kraftfahrzeuge gegen Seitenaufprall, die in der Rücklehne angeordnet ist und derart geformt ist, daß der aktivierte Gassack zwischen dem Kopf- und Schulterbereich des Insassen und der Seitenwand des Kraftfahrzeugs liegt und seine Höhe die Kopfhöhe nur unwesentlich übersteigt. Nachteilig ist jedoch, daß der im aktivierten Zustand befindliche Gassack in den Kopfkreis des Insassen eindringt.

Es ist die Aufgabe der vorliegenden Erfindung, den eingangs beschriebenen Fahrzeugsitz so zu gestalten, daß sich im Falle eines Seitenaufpralls des Fahrzeugs das Zentrum des sich aufblasenden Gassacks außerhalb des Kopfkreises des Insassen liegt und gewährleistet ist, daß die Kopf-/Halspartie des Insassen möglichst früh an dem verzögerungsverlauf des Fahrzeugs teilnimmt, d.h. ein möglichst kurzer Weg für die Verlagerung der Kopf-/Halspartie des Insassen zur Seitenstruktur des Fahrzeugs hin zur Verfügung steht.

Die Lösung dieser Aufgabe besteht darin, daß bei einem Fahrzeugsitz mit in der Rückenlehne integrierter Kopfstütze der den zusammengefalteten Gassack aufnehmende Behälter an der Seitenfläche des Fahrzeugsitzes im Übergangsbereich von der Rückenlehne zur Kopfstütze befestigt ist und somit im wesentlichen außerhalb des Kopfkreises des Insassen liegt.

Eine Ausgestaltung dieses Fahrzeugsitzes besteht darin, daß die Austrittsöffnung des Behälters in Fahrtrichtung oder zur Seitenstruktur des Fahrzeugs zeigt. Im ersten Fall ist der Gassack in Fahrtrichtung und im anderen Fall zunächst zur Seitenstruktur des Fahrzeugs und dann in Fahrtrichtung entfaltbar.

Bei einem anderen Lösungsvorschlag der erfindungsgemäßen Aufgabe ist vorgesehen, den den zusammengefalteten Gassack aufnehmenden Behälter etwa in der mittleren Höhe der der Seitenstruktur des Fahrzeugs gegenüberliegenden Seitenfläche der Rückenlehne mit nach oben gerichteter Austrittsöffnung für den Gassack anzuordnen, wobei der Gassack zunächst nach oben und dann in Fahrtrichtung entfaltbar ist.

Eine Lösung der erfindungsgemäßen Aufgabe kann auch dadurch erfolgen, daß der Behälter zur Aufnahme des zusammengefalteten Gassacks mit nach oben gerichteter Austrittsöffnung für den Gassack im oberen Endabschnitt der Rückenlehne im Bereich zwischen den die der Seitenstruktur des Fahrzeugs gegenüberliegenden Seitenflächen von Rückenlehne und Kopfstütze einschließenden vertikalen Ebenen angeordnet und der Gassack zunächst nach oben und dann in Fahrtrichtung entfaltbar ist.

Die erfindungsgemäßen Gestaltungsformen des Fahrzeugsitzes sorgen dafür, daß bei einem Seitenaufprall der Insasse vergleichsweise früh am Verzögerungsverlauf des Fahrzeugs teilnimmt, was zwar zu insgesamt höheren, aber immer noch unkritischen Kopf- und Halsbelastungen führt und am Ende des Verlagerungsweges kein harter Aufprall erfolgt. Nach der ersten Berührung des Fahrzeugs bei einem Seitenaufprall wird der Gasgenerator innerhalb einer Zeit von 3 bis 5 ms gezündet und das Gas strömt in den Gassack ein. Nach weiteren 20 bis 25 ms ist der Gassack vollständig aufgeblasen und damit der Weg für die Verlagerung der Kopf-/Halspartie des Insassen ist vergleichsweise kurz. Der Gassack führt zu einer gleichmäßigen Kraftverteilung auf den Kopf-/Halsbereich, was zu einer deutlich geringeren Kopfseitenbewegung und damit zu einer Reduzierung der Halswirbelbelastung führt. Außerdem werden dadurch die häufig tödlichen Kopfverletzungen durch Aufprall an einen harten Kontakt vermieden.

Eine zweckmäßige Weiterbildung der Erfindung besteht darin, daß eine der vorstehend beschriebenen Anordnungen einer Gassack-Aufprall-Schutzeinheit zusätzlich in dem der durch die Mittelachse des Fahrzeugs verlaufenden vertikalen Ebene benachbarten Abschnitt des Fahrzeugsitzes angebracht ist. Der sich im Falle eines Seitenaufpralls entsprechend aufblasende Gassack deckt die Kopf-/Halspartie des Insassen auch auf der der Seitenstruktur des Fahrzeugs abgewandten Seite ab, damit im Falle einer rotatorischen Seitwärtsbewegung des Kopfes zu dem auf dem Nebensitz sitzenden Insassen hin ein Zusammenstoß mit dessen Kopf vermieden wird, wenn der Kopf nach einem Aufschlag auf den zwischen der Seitenstruktur des Fahrzeugs und dem Insassen liegenden Gassack sich zurückbewegen sollte.

Eine Ausgestaltung der Erfindung besteht darin, daß der Gassack die Konstruktionsform eines kreis- oder ellipsenbogenförmig gekrümmten rechteckigen Prisma, dessen konvex gebogene Oberfläche im aktivierten Zustand im wesentlichen an der B-Säule des Fahrzeugs oder an einem in das Fahrzeuginnere eingedrungenen Gegenstand anliegt, aufweist. Die Konstruktionsform des Gassacks kann auch die Form eines Zylindersichelstücks besitzen. Derart gestaltete Gassäcke liegen im entfalteten Zustand bogenförmig zwischen der Seitenstruktur des Fahrzeugs und dem Kopf des Insassen.

Vorzugsweise ist der Gassack so ausgebildet, daß seine in eine Ebene ausgebreitete Fläche aus einem einteiligen Gewebestück besteht. Dadurch ist die Länge der Nähnähte des Gassacks auf das kleinstmögliche Maß reduziert, so daß die Abströmgeschwindigkeit des Gases aus dem aufgeblasenen Gassack über die Nähnähte verzögert und demzufolge der aktivierte Zustand über eine längere Zeit erhalten bleibt.

Von besonderer Bedeutung ist, daß Gassack und Gasgenerator örtlich getrennt voneinander angeordnet und durch einen Überströmkanal miteinander verbunden sind. Eine derartige Anordnung hat den Vorteil, daß die Bauhöhe bzw. Bautiefe der Gassack-Aufprall-Schutzeinheit relativ klein gehalten und der Gasgenerator außerhalb des Gefahrenbereichs für den Insassen eingebaut werden kann.

Die Erfindung ist in den Zeichnungen schematisch und beispielhaft dargestellt und wird nachstehend näher erläutert.

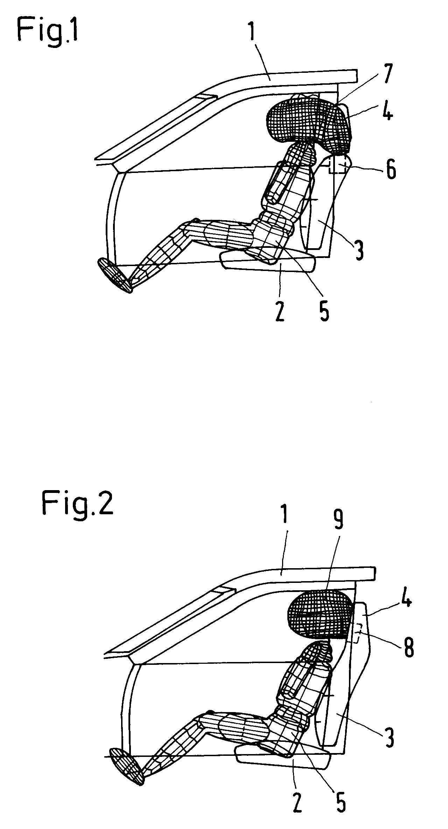

Die Figuren 1 bis 4 zeigen den vorderen Teil einer Insassenzelle eines Personenkraftwagens (1) mit einem aus Sitzkissen (2), Rückenlehne (3) und Kopfstütze (4) bestehenden Fahrersitz und einer darauf sitzenden anthropomorphen Prüfpuppe (5). Der Seitenaufprall erfolgt jeweils von der linken Fahrzeugseite.

In Fig. 1 befindet sich im oberen Endabschnitt der Rückenlehne (3) im Bereich zwischen den die der Seitenstruktur des Fahrzeugs gegenüberliegenden Seitenflächen von Rückenlehne (3) und Kopfstütze (4) einschließenden vertikalen Ebenen ein Hohlraum (6), in dem eine nicht dargestellte Gassack-Aufprall-Schutzeinheit untergebracht ist. Die Austrittsöffnung des Hohlraums (6) für den Gassack ist nach oben gerichtet und der Gassack (7) so gestaltet, daß er im aktivierten Zustand in der Seitenansicht eine etwa halbmondförmige Gestalt besitzt.

Die Fig. 2 zeigt einen Fahrzeugsitz mit in der Rückenlehne (3) integrierter Kopfstütze (4), wobei an der Seitenfläche des Fahrzeugsitzes im Übergangsbereich zwischen der Rückenlehne (3) und der Kopfstütze (4) ein Behälter (8) mit einer darin angeordneten, nicht dargestellten Gassack-Aufprall-Schutzeinheit angebracht ist, dessen Austrittsöffnung für den Gassack (9) in Fahrtrichtung zeigt. Von der Seite gesehen besitzt der Gassack (9) im aktivierten Zustand etwa die Form einer Ellipse.

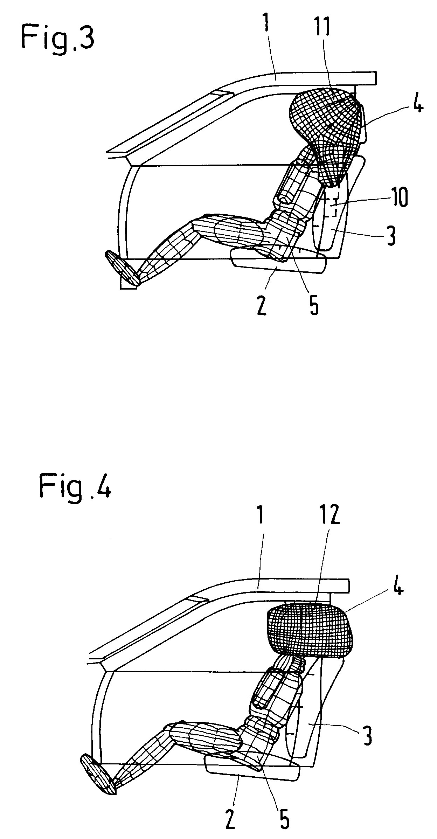

Bei dem in Fig. 3 dargestellten Fahrzeugsitz ist in der mittleren Höhe der Rückenlehne (3) an deren der Seitenstruktur des Fahrzeugs gegenüberliegenden Seitenfläche ein Behälter (10) für die nicht gezeigte Gassack-Aufprall-Schutzeinheit befestigt. Die Austrittsöffnung des Behälters (10) für den Gassack (11) ist nach oben gerichtet. Der Gassack (11) ist so gestaltet, daß er in der Seitenansicht im aktivierten Zustand etwa die Form einer Birne besitzt.

Fig. 4 zeigt einen Fahrzeugsitz, bei dem die Kopfstütze (4) in der Rückenlehne (3) integriert und an der Seitenfläche im Übergangsbereich von der Kopfstütze (4) zur Rückenlehne (3) ein Behälter für eine nicht dargestellte Gassack-Aufprall-Schutzeinheit angebracht ist, dessen Austrittsöffnung für den Gassack (12) zur Seite in Richtung auf die Seitenstruktur des Fahrzeugs gerichtet ist. Der Gassack (12) ist so ausgebildet, daß er von der Seite gesehen etwa die Form eines Trapez aufweist.

## Patentansprüche

1. Fahrzeugsitz, insbesondere für die Insassenzelle von Personenkraftwagen (1), bestehend aus Sitzkissen (2), Rückenlehne (3), Kopfstütze (4) und einer Gassack-Aufprall-Schutzeinheit gegen einen dynamischen Seitenaufprall, deren im inaktiven Zustand zusammengefalteter, durch das von einem Gasgenerator erzeugte Gas sich aufblasender, in den Fahrzeuginnenraum entfaltender Gassack (9, 12) im aktivierten Zustand im Raum zwischen der Kopf-/Halspartie des Insassen und der unmittelbar benachbarten Seitenstruktur des Fahrzeugs liegt, dadurch gekennzeichnet, daß bei einem Fahrzeugsitz mit in der Rückenlehne integrierter Kopfstütze (4) der den zusammengefalteten Gassack (9, 12) aufnehmende Behälter (8) an der Seitenfläche des Fahrzeugsitzes im Übergangsbereich von der Rückenlehne (3) zur Kopfstütze (4) befestigt ist.

2. Fahrzeugsitz nach Anspruch 1, dadurch gekennzeichnet, daß die Austrittsöffnung des Behälters (8) für den Gassack (9) in Fahrtrichtung zeigt und der Gassack in Fahrtrichtung entfaltbar ist.

3. Fahrzeugsitz nach Anspruch 1, dadurch gekennzeichnet, daß die Austrittsöffnung des Behälters für den Gassack (12) zur Seitenstruktur des Fahrzeugs zeigt und der Gassack zunächst zur Seitenstruktur hin und dann in Fahrtrichtung entfaltbar ist.

4. Fahrzeugsitz, insbesondere für die Insassenzelle von Personenkraftwagen (1), bestehend aus Sitzkissen (2), Rückenlehne (3), Kopfstütze (4) und einer Gassack-Aufprall-Schutzeinheit gegen einen dynamischen Seitenaufprall, deren im inaktiven Zustand zusammengefalteter, durch das von einem Gasgenerator erzeugte Gas sich aufblasender, in den Fahrzeuginnenraum entfaltender Gassack (11) im aktivierten Zustand im Raum zwischen der Kopf-/Halspartie des Insassen und der unmittelbar benachbarten Seitenstruktur des Fahrzeugs liegt, dadurch gekennzeichnet, daß der den zusammengefalteten Gassack (11) aufnehmende Behälter (10) etwa in der mittleren Höhe der Seitenfläche der Rückenlehne mit nach oben gerichteter Austrittsöffnung für den Gassack angebracht ist.

5. Fahrzeugsitz, insbesondere für die Insassenzelle von Personenkraftwagen (1), bestehend aus Sitzkissen (2), Rückenlehne (3), Kopfstütze (4) und einer Gassack-Aufprall-Schutzeinheit gegen einen dynamischen Seitenaufprall, deren im inaktiven Zustand zusammengefalteter, durch das von einem Gasgenerator erzeugte Gas sich aufblasender, in den Fahrzeuginnenraum entfaltender Gassack (7) im aktivierten Zustand im Raum zwischen der Kopf-/Halspartie des Insassen und der unmittelbar benachbarten Seitenstruktur des Fahrzeugs liegt, dadurch gekennzeichnet, daß der den zusammengefalteten Gassack (7) aufnehmende Behälter (6) mit einer nach oben gerichteten Austrittsöffnung für den Gassack (7) im oberen Endabschnitt der Rückenlehne (3) im Bereich zwischen den die Seitenflächen von Rückenlehne und Kopfstütze einschließenden vertikalen Ebenen angeordnet ist.

6. Fahrzeugsitz nach einem der Ansprüche 1 bis 5, dadurch gekennzeichnet, daß eine Gassack-Aufprall-Schutzeinheit in dem der durch die Mittelachse des Fahrzeugs verlaufenden vertikalen Ebene benachbarten Abschnitt des Fahrzeugsitzes angebracht ist.

7. Fahrzeugsitz nach einem der Ansprüche 1 bis 6, dadurch gekennzeichnet, daß die Konstruktionsform des Gassacks (7, 9, 11, 12) im wesentlichen einem kreis- oder ellipsenbogenförmig gekrümmten rechteckigen Prisma oder einem Zylindersichelstück entspricht, deren konvex gebogene Oberfläche im aktivierten Zustand zur Seitenstruktur des Fahrzeugs zeigt.

8. Fahrzeugsitz nach einem der Ansprüche 1 bis 7, dadurch gekennzeichnet, daß die in eine Ebene ausgebreitete Fläche des Gassacks aus einem einteiligen Gewebestück besteht.

9. Fahrzeugsitz nach einem der Ansprüche 1 bis 8, dadurch gekennzeichnet, daß Gasgenerator und Gassack örtlich getrennt voneinander angeordnet und durch einen Überströmkanal miteinander verbunden sind.
